# DEMANDE DE BREVET EUROPEEN

(11) **EP 1 542 309 A1**
(43) Date de publication de la demande: **15.06.2005**
(21) Numéro de dépôt: 03104590.9
(22) Date de dépôt: 08.12.2003
(51) Int. Cl.: H01Q 1/22, H01Q 9/04, G06K 19/077

(54) **Dispositif d'identification pour système RFID comprenant une antenne UHF, notamment une antenne PIFA**

(71) Demandeur: EM Microelectronic-Marin SA, 2074 Marin (CH)
(72) Inventeur: Pfefferli, Beat, 2075 Thielle-Wavre (CH)
(74) Mandataire: Ravenel, Thierry Gérard Louis

(57) **Abrégé**

Il est décrit un dispositif d'identification pour système d'identification électronique sans contact comprenant notamment une antenne UHF (10) pour la réception et/ou l'émission de signaux électromagnétiques et un circuit transpondeur (20) couplé à l'antenne et comprenant notamment des moyens de mémorisation (21) d'un identifiant unique (ID) au dispositif d'identification. L'antenne UHF est une antenne de type patch ou de type planaire inversée comprenant un élément radiant (12) disposé sensiblement parallèlement à un plan de masse (14), cette antenne supportant directement le circuit transpondeur. Préférablement, l'antenne UHF est une antenne planaire en F inversé (PIFA).

## Description

### DOMAINE TECHNIQUE

La présente invention concerne de manière générale le domaine des dispositifs électroniques d'identification pour système d'identification et/ou d'accès électronique sans contact (ou systèmes RFID - "Radio Frequency Identification"). Plus particulièrement, la présente invention concerne un tel dispositif d'identification comprenant notamment une antenne UHF pour la réception et/ou l'émission de signaux électromagnétiques et un circuit transpondeur couplé à l'antenne et comprenant notamment des moyens de mémorisation d'un identifiant unique au circuit transpondeur.

### ARRIÈRE-PLAN TECHNOLOGIQUE

Des dispositifs d'identification répondant à la définition générale ci-dessus sont déjà bien connus. Pour les application à ultra-haute fréquence (UHF - fréquences comprises entre 300 MHz et 3 GHz), ces dispositifs font typiquement appel à des antennes dipôles adaptées pour capter la composante électrique des signaux électromagnétiques émis à l'intention de ces dispositifs d'identification. Un problème majeur de ces antennes dipôles réside dans leur forte sensibilité à l'environnement dans lequel elles opèrent. En particulier, leur sensibilité est considérablement affectée par la nature du substrat sur lequel ces antennes sont susceptibles d'étre apposées. Ceci s'avère très problématique dans un très grand nombre d'applications dans la mesure où la nature de l'environnement dans lequel les dispositifs d'identification sont susceptibles d'étre utilisés être très variable. Ainsi, un même dispositif d'identification appliqué par exemple sur un objet métallique ou sur un objet non métallique présentera des caractéristiques considérablement différentes. Ceci peut conduire à une situation où certains dispositifs d'identification ne sont alors plus reconnus par le système d'identification électronique dans lequel ils doivent opérer.

La présente invention vise donc à proposer une solution qui soit plus robuste et qui soit peu affectée par la nature de l'environnement dans lequel elle doit opérer. La présente invention vise par ailleurs à proposer une solution qui reste cependant économique à réaliser et à fabriquer.

### EXPOSÉ DE L'INVENTION

La présente invention a ainsi pour objet un dispositif d'identification dont les caractéristiques sont énoncées dans la revendication indépendante 1.

Des modes de réalisation avantageux de ce dispositif d'identification font l'objet des revendications dépendantes.

Il est ainsi proposé de faire usage d'une antenne UHF de type patch (également connue sous la dénomination "Microstrip Antenna") ou de type planaire inversée (par ex. une antenne PIFA - "Planar Inverted-F Antenna"). La particularité de ces antennes résident dans le fait qu'elle comprennent notamment un élément radiant disposé sensiblement parallèlement à un plan de masse (un élément diélectrique pouvant par ailleurs être interposé entre l'élément radiant et le plan de masse afin de réduire les dimensions physiques de l'élément radiant), cette antenne supportant directement le circuit électronique du transpondeur.

Il convient de mentionner que les antennes susmentionnées sont bien connues. Les antennes PIFA sont en particulier appliquées dans le domaine de la téléphonie mobile. Une description détaillée de ce type d'antenne peut être trouvée dans le chapitre 5 intitulé *"Analysis of Planar Inverted-F Antennas and Antenna Design for Portable Radio Equipment",* par T. Taga, dans l'ouvrage *"Analysis, Design and Measurement of Small and Low-Profile Antennas",* K. Hirasawa et M. Haneishi, 1992, Artech House (pages 161 à 180). Les antennes patch ou "microstrip" (de plus grande dimensions que les antennes PIFA à fréquence équivalente) sont quant à elles par exemple utilisées pour la réception de signaux émis par satellite, par exemple pour les applications de positionnement par satellite (GPS, etc.). Une description détaillé de ce type d'antenne peut être trouvée dans le chapitre 22.8 intitulé *"Microstrip Antennas",* par W. F. Croswell et consorts, dans l'ouvrage *"Electronics Engineers' Handbook",* D. Christiansen et consorts, 4ème édition, 1997, édité par McGRAW-HILL (pages 22.32 à 22.39). L'application des antennes susmentionnées dans le domaines de la RFID n'est toutefois pas connue à ce jour.

Pour la première fois, l'inventeur a pu identifier que ces antennes permettent de répondre directement et efficacement au problème mentionné plus haut, c'est-à-dire rendre les dispositifs d'identification équipés de ces antennes moins sensibles à l'environnement dans lequel ils opèrent.

Dans le cadre de la présente invention, l'utilisation d'une antenne PIFA s'avère particulièrement avantageuse en raison de ses faibles dimensions, son faible profile, et ses coûts peu élevés de fabrication.

### BRÈVE DESCRIPTION DES DESSINS

D'autres caractéristiques et avantages de la présente invention apparaîtront plus clairement à la lecture de la description détaillée qui suit des modes de réalisation de l'invention donnés uniquement à titre d'exemples non limitatifs et illustrés par les dessins annexés où :
- la figure 1 montre un schéma bloc d'un circuit transpondeur de type passif ;
- la figure 2 est une vue en perspective d'une antenne PIFA utilisée dans le cadre de la présente invention;
- la figure 3 est une vue en coupe de l'antenne de la figure 2 illustrant une première variante de montage du circuit transpondeur; et
- la figure 4 est une vue en coupe de l'antenne de la figure 2 illustrant une seconde variante de montage du circuit transpondeur.

Il est à noter que les dimensions des éléments représentés ne sont pas nécessairement à l'échelle.

### MODES DE RÉALISATION DE L'INVENTION

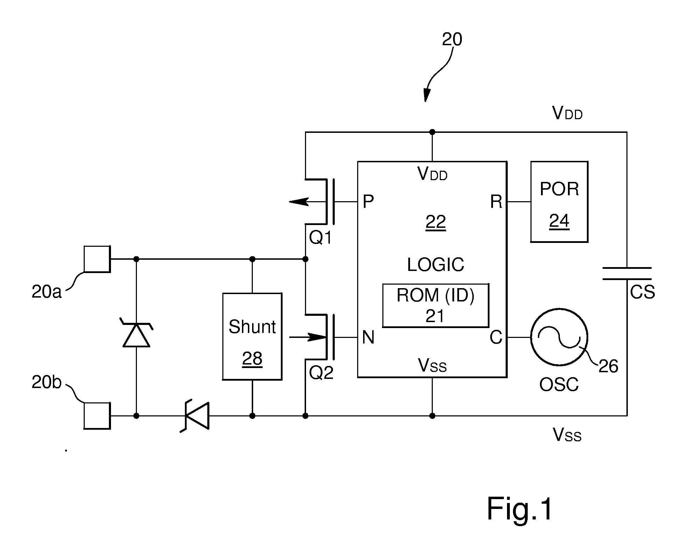

La figure 1 montre un schéma bloc d'un exemple d'un circuit transpondeur (ou simplement transpondeur) pour système d'identification et/ou d'accès électronique sans contact selon un mode de réalisation de l'invention. Ce transpondeur, désigné globalement par la référence numérique 20, est préférablement un transpondeur de type passif, c'est-à-dire un circuit alimenté par la tension dérivée du champ électromagnétique ambiant émis par une unité d'interrogation avoisinante.

Ce transpondeur 20 comporte des moyens de mémorisation 21 (typiquement une ROM ou une EEPROM) d'un identifiant unique, désigné ID, du transpondeur. Ce circuit comporte par ailleurs deux bornes de contact 20a et 20b pour le couplage à une antenne UHF (en particulier une antenne du type PIFA comme décrit ci-après) afin de permettre une lecture de l'identifiant unique ID par communication radiofréquence.

Le transpondeur 20 comporte par ailleurs un bloc logique 22 (comprenant notamment les moyens de mémorisation 21 de l'identifiant unique ID), une cellule de mise à zéro sous tension ou POR (Power On Reset) 24, un oscillateur RC interne 26, un régulateur de tension (Shunt Regulator) 28 et divers composants électriques qui seront brièvement présentés ci-après.

La capacité CS forme une capacité de stockage qui est chargée par la tension dérivée du champ électromagnétique ambiant et assure l'alimentation du circuit transpondeur 20. Cette capacité CS est à ce titre connectée entre les bornes d'alimentation V_{DD} et V_{SS} du circuit. Deux diodes Schottky de redressement sont par ailleurs connectées entre les bornes 20a et 20b, d'une part, et la borne 20b et la masse V_{SS}, d'autre part.

Le régulateur de tension 28 a essentiellement deux fonctions, l'une de limiter la tension aux bornes du bloc logique 22 et l'autre de limiter la tension aux bornes des diodes Schottky. L'oscillateur RC interne 26 délivre un signal d'horloge au bloc logique 22 afin de notamment définir la fréquence de cadencement du bloc logique 22 et des données délivrées. La cellule POR 24 assure quant à elle une mise à zéro adéquate du bloc logique 22 lors de la mise sous tension du circuit.

Le transistor à canal n Q2 est utilisé pour moduler le signal de l'antenne du transpondeur, afin notamment de transmettre l'identifiant unique ID. Lorsqu'il est activé, le transistor Q2 charge l'antenne, changeant ainsi la charge vue par l'antenne de l'unité d'interrogation externe et, par là même, la quantité d'énergie réfléchie vers l'unité d'interrogation. Le transistor à canal p Q1 est quant à lui désactivé lorsque le transistor de modulation Q2 est activé afin d'éviter que ce dernier ne décharge la capacité de stockage CS.

On ne s'attardera pas plus longtemps sur la description du circuit transpondeur 20 de la figure 1. On pourra par exemple se référer à la spécification technique du produit P4222 "Read-only UHF Identification Device" commercialisé par EM Microelectronic-Marin SA pour de plus amples informations au sujet du fonctionnement de ce type de circuits, notamment en ce qui concerne l'encodage des données et les protocoles anticollisions pouvant être adoptés.

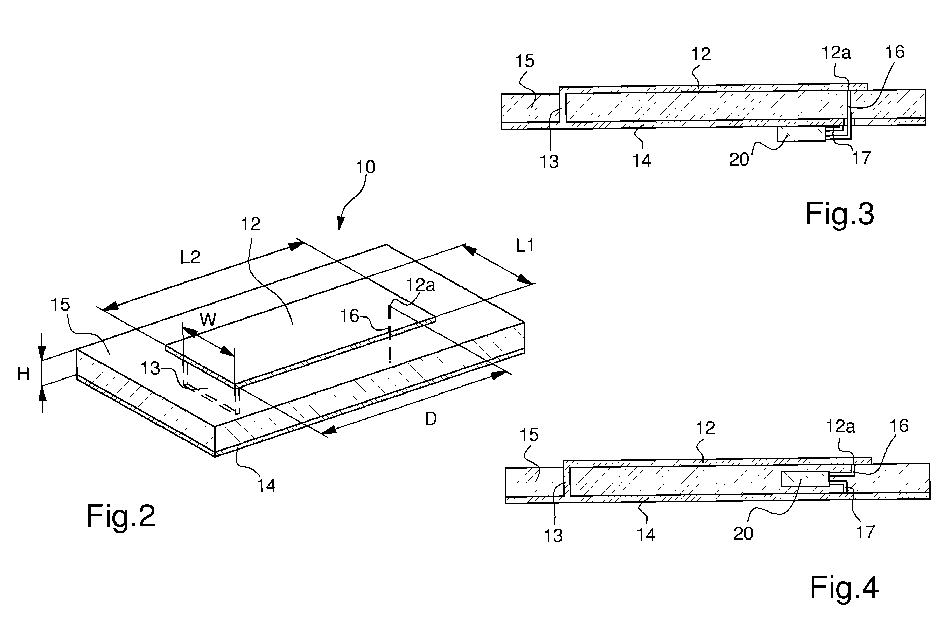

La figure 2 est une vue en perspective globale d'une antenne PIFA préférablement utilisée dans le cadre de la présente invention pour être couplée au circuit transpondeur qui vient d'être présenté. Cette antenne, désignée globalement par la référence numérique 10, comporte un élément radiant 12 espacé et séparé d'un plan de masse 14. Un élément de court-circuit 13, disposé sensiblement perpendiculairement à l'élément radiant 12 et au plan de masse 14, connecte un bord de l'élément radiant 12 au plan de masse 14. Dans cet exemple de réalisation, un élément diélectrique 15 est encore interposé entre l'élément radiant 12 et le plan de masse 14. Cet élément diélectrique permet de réduire les dimensions physiques de l'antenne.

L'excitation de l'antenne 10 est assurée par un conducteur d'excitation 16 reliant un point 12a de l'élément radiant 12 au travers de l'élément diélectrique 15. La position du point d'excitation 12a, en particulier par rapport à l'élément de court-circuit 13, détermine notamment l'impédance de l'antenne. En règle générale, l'impédance augmente avec la distance séparant l'élément de court-circuit 13 du point d'excitation 12a. L'antenne 10 de la figure 2 est couplée au circuit transpondeur 20 de la figure 1 en reliant le point d'excitation 12a et le plan de masse 14 respectivement aux bornes 20a et 20b du circuit transpondeur 20.

Pour une application dans la gamme de fréquences UHF, à une fréquence de 869 MHz par exemple, les dimensions de l'élément radiant 12 (avec diélectrique 15) sont à titre illustratif de l'ordre de L1 = 2.5 cm par L2 = 4 cm avec un plan de masse 14 d'environ 4.5 cm par 6 cm. En diminuant la largeur W de l'élément de court-circuit 13 par rapport à la largeur L1 de l'élément radiant 12, la fréquence de résonance de l'antenne diminue. En jouant sur cette largeur W, il est donc possible de réduire encore les dimensions de l'antenne. La largeur de bande de l'antenne augmente quant à elle avec la hauteur H de l'antenne ainsi que le rapport dimensionnel L1/L2 de l'élément radiant 12. Une analyse détaillée des antennes PIFA est disponible dans le document *"Analysis of Planar Inverted-F Antennas and Antenna Design for Portable Radio Equipment"* déjà mentionné en préambule.

On se référera maintenant aux figures 3 et 4 qui illustrent deux variantes préférées pour le montage du circuit transpondeur 20 sur l'antenne 10. Dans le cadre de la présente invention, on notera que le circuit transpondeur 20 est avantageusement disposé directement sur l'antenne 10, cette dernière agissant ainsi comme support. Dans la variante de la figure 3, le circuit transpondeur 20 est disposé sur la face (face arrière) du plan de masse 14 qui est opposée à la face du côté de laquelle se trouve l'élément radiant 12. Le conducteur d'excitation 16 traverse dans ce cas l'élément diélectrique 15 ainsi que le plan de masse 14 (duquel il est isolé) pour être connecté au circuit transpondeur 20 qui est apposé directement sur la face arrière du plan de masse 14, ce dernier étant lui-aussi relié au circuit 20 par un conducteur de masse 17.

Dans la variante de la figure 4, le circuit transpondeur 20 est intégré directement dans l'épaisseur de l'élément diélectrique 15 avec les conducteurs d'excitation 16 et de masse 17. Cette variante est particulièrement avantageuse dans la mesure où le circuit transpondeur 20 est totalement intégré à l'antenne 10. Bien que le circuit transpondeur 20 soit disposé entre l'élément radiant 12 et le plan de masse 14, les dimensions typiquement faibles du circuit 20 n'affectent pas dans une trop large mesure le fonctionnement de l'antenne 10.

Les figures 2 à 4 montrent des structures d'antenne PIFA munies d'un élément diélectrique interposé entre l'élément radiant 12 et le plan de masse 14. Ces structures peuvent aisément être réalisées selon des techniques de fabrication de plaquettes de circuits imprimés en structurant des métallisations appropriées sur chacune des faces d'une plaquette en matériau diélectrique. Pour la réalisation de la variante de la figure 4, le circuit transpondeur 20 et ses conducteurs 16, 17 pourraient préalablement être noyés dans une plaque de matériau diélectrique, les métallisations nécessaires à la formation de l'élément radiant 12, de l'élément de court-circuit 13 et du plan de masse 14 étant ensuite réalisées sur les faces et au travers de la plaque diélectrique. Il pourrait également être envisageable de ménager une cavité dans l'épaisseur de l'élément diélectrique 15 pour y loger le circuit transpondeur 20.

En lieu et place d'une structure du type susmentionné, il est parfaitement envisageable de réaliser l'antenne PIFA sous la forme d'une structure autoportante. Dans cette optique, les éléments 12, 13 et 14 ne seraient alors plus réalisés sous la forme de métallisations, mais sous la forme de plaques métalliques découpées et pliées à la forme adéquate. Il n'est donc pas nécessaire de faire usage d'un élément diélectrique spécifique, l'espace d'air entre l'élément radiant 12 et le plan de masse 14 pouvant faire office de diélectrique. Dans ce cas cependant, les dimensions globales de l'antenne, à fréquence équivalente, devront être plus importantes.

On comprendra que diverses modifications et/ou améliorations évidentes pour l'homme du métier peuvent être apportées aux modes de réalisation décrits dans la présente description sans sortir du cadre de l'invention défini par les revendications annexées. En particulier, la présente invention n'est pas limitée uniquement à l'utilisation d'une antenne PIFA couplée au circuit transpondeur. Toute autre structure d'antenne comprenant un élément radiant disposé sensiblement parallèlement à un plan de masse et pouvant supporter directement le circuit transpondeur peut être utilisée. Ceci est le cas des antennes dites "patch" (ou "microstrip"). La structure d'antenne PIFA est néanmoins préférable en raison de ses dimensions comparativement plus faibles.

## Revendications

1. Dispositif d'identification pour système d'identification électronique sans contact comprenant notamment une antenne UHF (10) pour la réception et/ou l'émission de signaux électromagnétiques et un circuit transpondeur (20) couplé à ladite antenne (10) et comprenant notamment des moyens de mémorisation (21) d'un identifiant unique (ID) au dit dispositif d'identification,
**caractérisé en ce que** ladite antenne UHF (10) est une antenne de type patch ou de type planaire inversée comprenant un élément radiant (12) disposé sensiblement parallèlement à un plan de masse (14) et **en ce que** ladite antenne (10) supporte directement ledit circuit transpondeur (20).

2. Dispositif d'identification selon la revendication 1, **caractérisé en ce que** ladite antenne UHF (10) comporte par ailleurs un élément diélectrique (15) interposé entre ledit élément radiant (12) et ledit plan de masse (14), ledit circuit transpondeur (20) étant disposé dans l'épaisseur dudit élément diélectrique (15).

3. Dispositif d'identification selon la revendication 1, **caractérisé en ce que** ledit circuit transpondeur (20) est disposé sur une face dudit plan de masse (14) opposée à la face du côté de laquelle se trouve ledit élément radiant (12).

4. Dispositif d'identification selon la revendication 3, **caractérisé en ce que** ladite antenne UHF (10) est une antenne planaire autoportante en F inversé, ou antenne PIFA, cette antenne comprenant en outre un élément de court-circuit (13) connectant un bord dudit élément radiant (12) au dit plan de masse (14).

5. Dispositif d'identification selon l'une quelconque des revendications 1 à 3, **caractérisé en ce que** ladite antenne UHF (10) est une antenne planaire en F inversé, ou antenne PIFA, cette antenne comprenant en outre un élément de court-circuit (13) connectant un bord dudit élément radiant (12) au dit plan de masse (14).

6. Dispositif d'identification selon l'une quelconque des revendications précédentes, **caractérisé en ce que** ledit circuit transpondeur (20) est de type passif et comporte des moyens pour extraire l'énergie électrique nécessaire au fonctionnement dudit dispositif à partir du champ électromagnétique capté par ladite antenne UHF (10).
